# EUROPEAN PATENT APPLICATION

(11) **EP 3 678 357 A1**
(43) Date of publication of application: **08.07.2020**
(21) Application number: 18853961.3
(22) Date of filing: 03.09.2018
(51) Int. Cl.: H04M 1/725

(54) **INFORMATION PROVIDING METHOD AND ELECTRONIC DEVICE SUPPORTING SAME**

(30) Priority: 07.09.2017 KR 20170114570
(71) Applicant: Samsung Electronics Co., Ltd., Suwon-si, Gyeonggi-do 16677 (KR)
(72) Inventor: KIM, Jeong Hoon, Hwaseong-si Gyeonggi-do 18443 (KR); LIM, Jong Kyoung, Suwon-si Gyeonggi-do 16700 (KR); KIM, Jae Won, Osan-si Gyeonggi-do 18132 (KR); YOO, Jae In, Seoul 04075 (KR); LEE, Hyun Woo, Suwon-si Gyeonggi-do 16689 (KR); YANG, Jong Eun, Seoul 05267 (KR)
(74) Representative: Arnold & Siedsma
(86) International application number: PCT/KR2018/010231
(87) International publication number: WO 2019/050237

(57) **Abstract**

An electronic device of the present disclosure may: transmit identification information corresponding to a call counterpart to an external server, using a communication circuit; receive state information of the call counterpart from the external server as a response to the transmission of the identification information; and display the state information of the call counterpart, in one area of a user interface of an application.

## Description

### [TECHNICAL FIELD]

The present disclosure relates to technologies of providing information in communication environments.

### [BACKGROUND ART]

Recently, with the rapid spread of electronic devices, each of which has an independent operating system, each of the electronic devices may provide various functions of promoting user convenience. For example, a communication function (e.g., a call function) of supporting to transmit and receive information resources (e.g., voice data) without a space-time constraint on operation environments may be added to a pivotal function of the electronic device to be grafted onto various services. A profile sharing service which provides text or voice data associated with a state of a user of an electronic device to an external device among various types of services may be used for various operation platforms in communication environments.

### [DISCLOSURE]

### [TECHNICAL PROBLEM]

In connection with sharing a state message in the form of text or voice data, the operation of a profile sharing service may include allowing a user to passively enter text for state information or select a standardized voice (e.g., "I cannot talk right now.", "I'm driving.", "I'm meeting, so I'll get back to you in a minute.", or the like). In this case, the state message may fail to reflect a current state of the user in real time or organically and may result in sharing inaccurate state information when state information of the user is not updated. In addition, when the state message is limited to a specified interface (e.g., a contact list) or a state (e.g., a call connection state) on an external device to be provided, it may be difficult for a user of the external device to intuitively recognize state information of another user.

Aspects of the present disclosure are to address at least the above-mentioned problems and/or disadvantages and to provide at least the advantages described below. Accordingly, an aspect of the present disclosure is to provide a method for providing information about a user of an electronic device to at least one external device and an electronic device for supporting the same.

### [TECHNICAL SOLUTION]

In accordance with an aspect of the present disclosure, an electronic device is provided. The electronic device may include a communication circuit, a memory storing an application for supporting a call function, a display, and a processor configured to be electrically connected with the communication circuit, the memory, and the display.

In accordance with an aspect of the present disclosure, the processor may be configured to output a user interface including a dial button and a call send button according to execution of the application on the display, obtain a user input for determining a called party through the user interface, transmit identification information corresponding to the determined called party to an external server using the communication circuit, receive state information of the called party as a response to the transmission of the identification information from the external server using the communication circuit, display the state information of the called party on one region of the user interface of the application, and originate a call to the called party in response to selection of the call send button.

In accordance with another aspect of the present disclosure, the processor may be configured to output a user interface according to execution of the application on the display, obtain a user input for determining an information sharing condition for state information of a user of the electronic device to be shared with a called party, through the user interface, and transmit state information corresponding to the determined information sharing condition to an external server using the communication circuit.

### [ADVANTAGEOUS EFFECT]

According to various embodiments, the electronic device may allow external users to intuitively recognize a state of a user of the electronic device by sharing state information of the user of the electronic device.

In addition, various effects directly or indirectly ascertained through the present disclosure may be provided.

### [DESCRIPTION OF DRAWINGS]

FIG. 1a is a view illustrating an environment where an electronic device is operated, according to an embodiment;
FIG. 1b is a block diagram illustrating an integrated service system according to an embodiment;
FIG. 1c is a view illustrating an information management module of an electronic device according to an embodiment;
FIG. 2a is a signal sequence diagram illustrating a process of obtaining state information about a user of an external device according to an embodiment;
FIG. 2b is a view illustrating various forms of obtaining state information about a user of an external device according to an embodiment;
FIG. 3a is a view illustrating a first form in which an electronic device displays state information about a user of an external device through a first interface according to an embodiment;
FIG. 3b is a view illustrating a second form in which an electronic device displays state information about a user of an external device through a first interface according to an embodiment;
FIG. 3c is a view illustrating a third form in which an electronic device displays state information about a user of an external device through a first interface according to an embodiment;
FIG. 3d is a view illustrating a fourth form in which an electronic device displays state information about a user of an external device through a first interface according to an embodiment;
FIG. 3e is a view illustrating a form in which an electronic device displays state information about a user of an external device through a second interface according to an embodiment;
FIG. 4a is a view illustrating a form of setting a first information sharing condition of an electronic device according to an embodiment;
FIG. 4b is a view illustrating various forms in which an electronic device displays state information about a user of an external device based on settings of a first information sharing condition of the external device condition according to an embodiment;
FIG. 5a is a view illustrating a form of setting a second information sharing condition of an electronic device according to an embodiment;
FIG. 5b is a view illustrating various forms in which an electronic device displays state information about a user of an external device based on settings of a second information sharing condition of the external device condition according to an embodiment;
FIG. 6a is a view illustrating a form of setting a third information sharing condition of an electronic device according to an embodiment;
FIG. 6b is a view illustrating various forms in which an electronic device displays state information about a user of an external device based on settings of a third information sharing condition of the external device condition according to an embodiment;
FIG. 7a is a view illustrating a form of setting a fourth information sharing condition of an electronic device according to an embodiment;
FIG. 7b is a view illustrating various forms in which an electronic device displays state information about a user of an external device based on settings of a fourth information sharing condition of the external device condition according to an embodiment; and
FIG. 8 is a view illustrating an electronic device in a network environment according to an embodiment.

### [MODE FOR INVENTION]

Hereinafter, various embodiments of the present disclosure may be described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

In the present disclosure, the expressions "have", "may have", "include" and "comprise", or "may include" and "may comprise" used herein indicate existence of corresponding features (e.g., components such as numeric values, functions, operations, or parts) but do not exclude presence of additional features.

In the present disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in the present disclosure may be used to refer to various components regardless of the order and/or the priority and to distinguish the relevant components from other components, but do not limit the components. For example, "a first user device" and "a second user device" indicate different user devices regardless of the order or priority. For example, without departing the scope of the present disclosure, a first component may be referred to as a second component, and similarly, a second component may be referred to as a first component.

It will be understood that when a component (e.g., a first component) is referred to as being "(operatively or communicatively) coupled with/to" or "connected to" another component (e.g., a second component), it may be directly coupled with/to or connected to the other component or an intervening component (e.g., a third component) may be present. In contrast, when a component (e.g., a first component) is referred to as being "directly coupled with/to" or "directly connected to" another component (e.g., a second component), it should be understood that there are no intervening component (e.g., a third component).

According to the situation, the expression "configured to" used in the present disclosure may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of" operating together with another device or other parts. For example, a "processor configured to (or set to) perform A, B, and C" may mean a dedicated processor (e.g., an embedded processor) for performing a corresponding operation or a generic-purpose processor (e.g., a central processing unit (CPU) or an application processor) which performs corresponding operations by executing one or more software programs which are stored in a memory device.

Terms used in the present disclosure are used to describe specified embodiments and are not intended to limit the scope of the present disclosure. The terms of a singular form may include plural forms unless otherwise specified. All the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal unless expressly so defined in various embodiments of the present disclosure. In some cases, even if terms are terms which are defined in the present disclosure, they may not be interpreted to exclude embodiments of the present disclosure.

An electronic device according to various embodiments of the present disclosure may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs)), a fabric or garment-integrated type (e.g., an electronic apparel), a body-attached type (e.g., a skin pad or tattoos), or a bio-implantable type (e.g., an implantable circuit).

According to various embodiments, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, or Google TV™), game consoles (e.g., Xbox™ or PlayStation™), electronic dictionaries, electronic keys, camcorders, electronic picture frames, and the like.

According to another embodiment, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, Global Navigation Satellite System (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automated teller machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments, the electronic device may be one of the above-described devices or a combination thereof. An electronic device according to an embodiment may be a flexible electronic device. Furthermore, an electronic device according to an embodiment of the present disclosure may not be limited to the above-described electronic devices and may include other electronic devices and new electronic devices according to the development of technologies.

Hereinafter, electronic devices according to various embodiments will be described with reference to the accompanying drawings. In the present disclosure, the term "user" may refer to a person who uses an electronic device or may refer to a device (e.g., an artificial intelligence electronic device) that uses the electronic device.

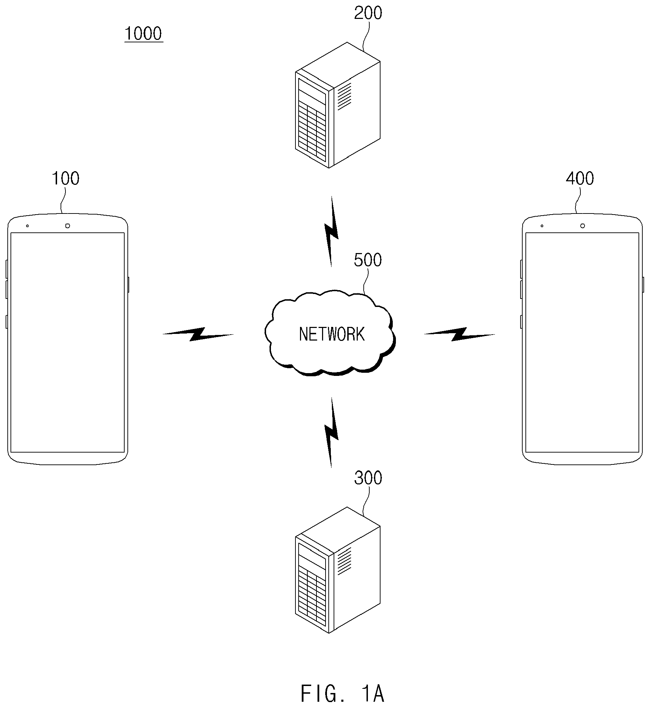

FIG. 1a is a view illustrating an environment where an electronic device is operated, according to an embodiment.

In an embodiment, an electronic device 100 may include at least one application program for supporting to operate a communication function with at least one external device (e.g., an external device 400) or operate a service added to the communication function. The communication function may include a call function with the external device 400. The communication function described hereinafter may be understood as the call function. Various examples of the application program may include a call, contact, or message application program (hereinafter referred to as "first application program") which is loaded in a preloaded form when the electronic device 100 is manufactured or is installed in a third party form from an online market.

According to an embodiment, the electronic device 100 may provide state information about a user of the at least one external device 400 (or the at least one external device 400) associated with a specified communication environment (e.g., a state where the first application program is executed, a dial input state for a called party, an outgoing call connection state, or the like) based on operation of the first application program. In this regard, the electronic device 100 may be linked with an information collection server 200, an information sharing server 300, and the at least one external device 400 to construct an integrated service system 1000. The components of the integrated service system 1000 may establish a network 500 (or a communication channel) for a state information sharing service and may interact (e.g., transmit and receive data) based on the network 500. For example, the at least one external device 400 may load state information associated with the user of the external device 400 from its internal memory, or may obtain state information about the user of the external device 400 from the information collection server 200 and may transmit the obtained state information to the information sharing server 300. The information sharing server 300 may transmit state information about the user of the external device 400 to the electronic device 100 depending on a request of the electronic device 100 or the external device 400. In an embodiment, the electronic device 100 may display state information about the user of the external device 400, received from the information sharing server 300, based on at least one interface associated with the first application program. For example, when the communication environment is created, the electronic device 100 may provide information about a current state of the user of the external device 400 to a user of the electronic device 100 by obtaining state information about the user of the at least one external device 400 associated with the communication environment from the information sharing server 300 and outputting the obtained state information.

In various embodiments described above or below, it may be assumed that the electronic device 100 obtains and outputs state information associated with the user of the at least one external device 400 based on the information collection server 200 or the information sharing server 300. Herein, function operations performed by the electronic device 100 and the at least one external device 400 are interchangeable. In other words, the same or similarly to those described above, the at least one external device 400 may obtain state information about the user of the electronic device 100 and may output the obtained state information based on the first application program. Referring to the accompanying drawings, a description will be given of various embodiments associated with operating a state information sharing service of the electronic device 100 and function operations of components implementing the same.

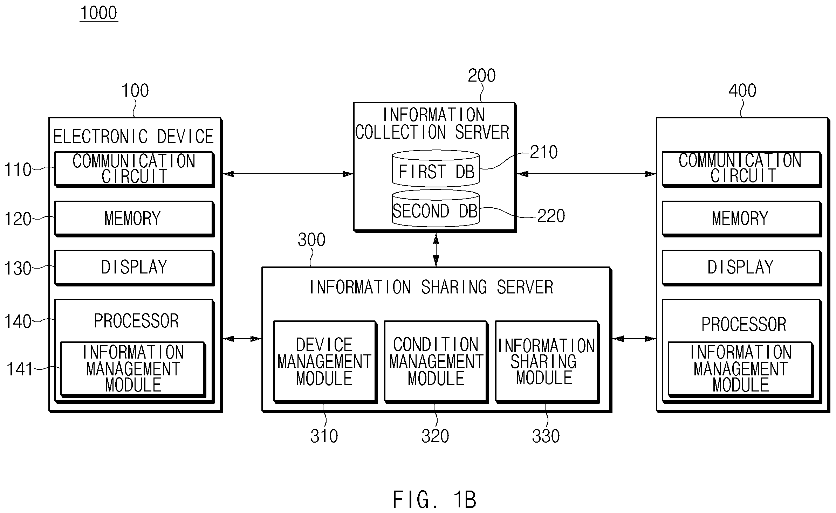

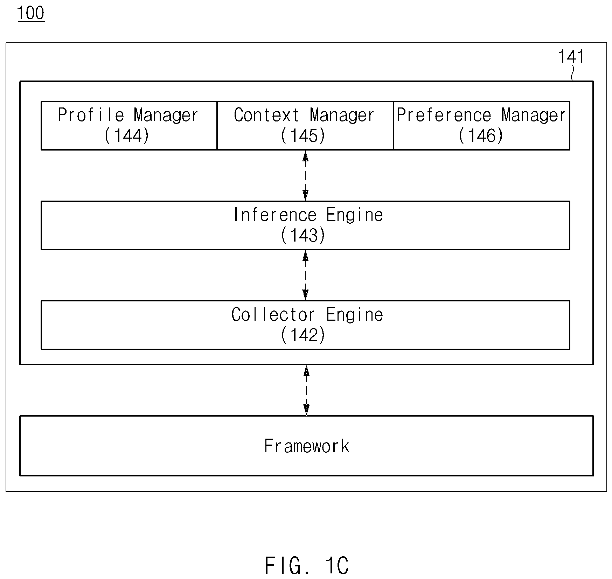

FIG. 1b is a block diagram illustrating an integrated service system according to an embodiment. FIG. 1c is a view illustrating an information management module of an electronic device according to an embodiment.

Referring to FIG. 1b, an integrated service system 1000 according to an embodiment may include an electronic device 100, an information collection server 200, an information sharing server 300, or at least one external device 400. In various embodiments, the integrated service system 1000 may fail to include at least one of the above-mentioned components or may further include other components which are not shown. For example, the integrated service system 1000 may further include at least one external server (not shown) (e.g., a server for a manufacturer, a server for a manufacturer of an operating system (OS), a mobile network operator (MNO) server, a server for a 3^{rd} party developer, or the like) associated with the electronic device 100 or the at least one external device 400. The at least one external server may provide a variety of information (e.g., application program operation information, service account information, call history information, location information, or the like) accompanied in operating the electronic device 100 or the at least one external device 400 to the information collection server 200 to support to perform a function of the information collection server 200, described below.

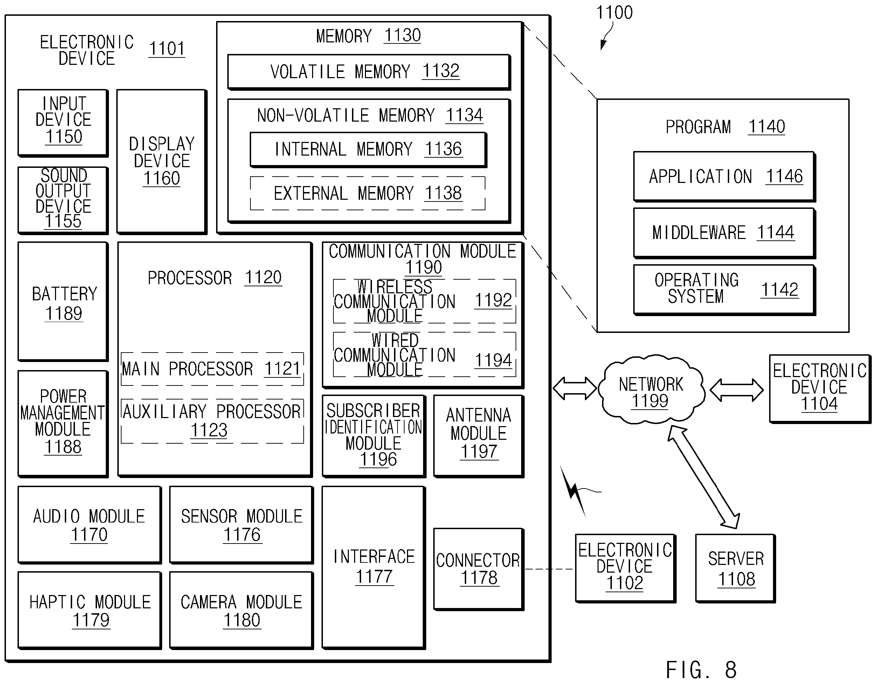

According to an embodiment, the electronic device 100 may include a communication circuit 110, a memory 120, a display 130, or a processor 140. The electronic device 100 may further include components of an electronic device 1101 of FIG. 8 to be described with reference to FIG. 8.

The communication circuit 110 (or a communication module or a communication interface) may support communication between the electronic device 100 and the information collection server 200, the information sharing server 300, and/or the at least one external device 400. In this regard, the communication circuit 110 may establish wired communication or wireless communication according to a defined protocol with the information collection server 200, the information sharing server 300, or the at least one external device 400. The communication circuit 110 may transmit or receive data associated with operating a state information sharing service with the information collection server 200, the information sharing server 300, or the at least one external device 400 or may originate and receive a call in connection with operating a communication function, by accessing a network (e.g., a network 500 of FIG. 1a) based on the wired communication or the wireless communication.

The memory 120 may store at least one data incidental to operating the electronic device 100 or may store at least one command associated with function operations of the components of the electronic device 100. Alternatively, the memory 120 may store at least one application program loaded or installed in the electronic device 100. In an embodiment, the memory 120 may store log information associated with operating the electronic device 100 or the application program, user personal information (e.g., a name, an age, a gender, an address, or the like) based on service account information, identification information (e.g., a model number, a unique identifier (ID), a telephone number, operating system information, or the like) of the electronic device 100, or the like. Alternatively, the memory 120 may include at least one database (DB) capable of storing the information for each category.

The display 130 may output a variety of content. For example, the display 130 may output an interface associated with executing at least one application program (e.g., a call, contact, message application program or the like) which supports a communication environment of the electronic device 100. Alternatively, the display 130 may output at least one interface capable of receiving a state information input from a user of the electronic device 100 or may output an interface including information resources received from the outside (e.g., the information sharing server 300, the at least one external device 400, or the like).

The processor 140 may be electrically or operatively connected with the above-mentioned components of the electronic device 100 to perform control, communication, an arithmetic operation, data processing, or the like for the components. In an embodiment, the processor 140 may include an information management module 141 in connection with operating a state information sharing service of the electronic device 100. The information management module 141 may load at least one information (e.g., log information, user personal information, identification information of the electronic device 100, or the like) stored in the memory 120 and may provide the loaded information to the information collection server 200, or may receive at least one information associated with the electronic device 100 (e.g., application program operation information, service account information, call history information, location information, or the like) from the information collection server 200 and may synchronize the received information with information stored in the memory 120 or information corresponding to the received information. Alternatively, the information management module 141 may manage information associated with at least one information sharing condition set under user control in connection with operating the state information sharing service and may transmit the information associated with the information sharing condition to the information sharing server 300. Alternatively, the information management module 141 may transmit state information associated with the user of the electronic device 100 (or the electronic device 100) to the information sharing server 300 or may request and obtain state information associated with a user of the at least one external device 400 (or the at least one external device 400).

In an embodiment, the at least one external device 400 may include the same or similar component as at least one component (e.g., the communication circuit 110, the memory 120, the display 130, the processor 140, the information management module 141, or the like) of the electronic device 100 and may perform function operations of the above-mentioned components of the electronic device 100 in the same or similar manner.

According to an embodiment, the information collection server 200 may obtain state information, associated with a user of a corresponding device (or the corresponding device), in real time or over a scheduled period from the electronic device 100 and/or the at least one external device 400. Alternatively, the information collection server 200 may obtain information associated with the electronic device 100 and/or the at least one external device 400 from the at least one external server (e.g., a server for a manufacturer of the electronic device 100 or the external device 400, a server for a manufacturer of an OS, a mobile network operator (MNO) server, a server for a 3^{rd} party developer, or the like). In this regard, the information collection server 200 may include at least one DB (e.g., a first DB 210, a second DB 220, and/or the like) for managing obtained state information for each device.

In various embodiments, in transmitting state information to the information sharing server 300 at the information management module 141 of the electronic device 100, when referring to only at least one information (e.g., log information, user personal information, identification information of the electronic device 100, or the like) stored in the memory 120 (that is, when the information management module 141 does not obtain information associated with the electronic device 100 from the information collection server 200), the components of the information collection server 200 may be excluded from the integrated service system 1000.

According to an embodiment, the information sharing server 300 may provide state information associated with the user of the at least one external device 400 (or the at least one external device 400) to the electronic device 100 based on an information sharing condition set by the at least one external device 400. In response, the information sharing server 300 may provide state information associated with the user of the electronic device 100 (or the electronic device 100) to the at least one external device 400 depending on an information sharing condition set in the electronic device 100. In connection with performing such a function, the information sharing server 300 may include a device management module 310, a condition management module 320, or an information sharing module 330. The device management module 310 may manage information associated with the electronic device 100 and/or the at least one external device 400 which configures the integrated service system 1000 (or operates a state information sharing service) (e.g., device identification information, service account information, user personal information, or the like). The condition management module 320 may receive and manage information associated with an information sharing condition of the electronic device 100 and/or the at least one external device 400 from the electronic device 100 and/or the at least one external device 400 and may deliver the information associated with the information sharing condition of the electronic device 100 or the at least one external device 400 to the information sharing module 330 when a function of the information sharing module 330, described below, is performed. The information sharing module 330 may transmit state information associated with the at least one external device 400 to the electronic device 100 depending on a request of the electronic device 100 (or the at least one external device 400). Alternatively, the information sharing module 330 transmit the state information to the electronic device 100 irrespective of a request of the electronic device 100 (or the at least one external device 400). In this operation, the information sharing module 330 may exclude transmission of state information associated with a specific external device among the at least one external device 400 to the electronic device 100 with reference to information associated with an information sharing condition of the at least one external device 400. For example, when an information sharing condition of a first external device among the at least one external device 400 is set not to opened (or shared), the information sharing module 330 may fail to transmit state information associated with the first external device to the electronic device 100. Alternatively, the information sharing module 330 may transmit only state information corresponding to an information sharing condition of the at least one external device 400 to the electronic device 100. For example, when an information sharing condition for first state information (e.g., location information) of a user of a specific external device (or the specific external device) among at least one information sharing condition set in the specific external device is set not to be opened (or shared), the information sharing module 330 may transmit only state information except for the first state information to the electronic device 100.

In various embodiments, the information collection server 200 and the information sharing server 300 may be implemented independently of each other, or at least a portion of the information collection server 200 and the information sharing server 300 may be integrally implemented.

Referring to FIG. 1c, in connection with managing information associated with the electronic device 100 (or the user of the electronic device 100), which is stored in the memory 120 or is received from the information collection server 200, the information management module 141 may include a collector engine 142, an inference engine 143, a profile manager 144, a context manager 145, or a preference manager 146.

The collector engine 142 may collect log information associated with operating the electronic device 100 or an application program from the memory 120. Alternatively, the collector engine 142 may collect information associated with the electronic device 100 (e.g., application program operation information, service account information, call history information, location information, or the like), which is provided from the information collection server 200 and is stored in the memory 120. In this regard, the collector engine 142 may include instructions for causing the processor 140 to obtain at least one log information stored in the memory 120 or information associated with the electronic device 100 in real time, at a specified period, or upon information update using at least one application programming interface (API) defined in a framework. The collector engine 142 may deliver at least one information obtained by the processor 140 to the inference engine 143.

The inference engine 143 may determine at least one information transmitted from the collector engine 142. In this regard, the inference engine 143 may include a model or algorithm which supports a syntactic analysis or a semantic analysis of the transmitted information. The inference engine 143 may analyze a text for log information (e.g., location information, time information, motion information, connecting device information, power information, app usage information, roaming information, charging information, displaying information, or the like) transmitted based on the model or algorithm or for information associated with the electronic device 100 or may analyze data included in the information, and may derive the meaning of the information. The inference engine 143 may include instructions for causing the processor 140 to perform the syntactic analysis or the semantic analysis and determine the meaning of log information or information associated with the electronic device 100 and may classify the information, the meaning of which is determined by the processor 140, for each specified category (e.g., each profile, each context, each preference, or the like). The inference engine 143 may deliver the at least one classified information to a corresponding manager (e.g., the profile manager 144, the context manager 145, or the preference manager 146).

The profile manager 144, the context manager 145, or the preference manager 146 may separately store and manage at least one information transmitted from the inference engine 143 in a specific area of the memory 120. According to an embodiment, the profile manager 144 may manage service account information associated with the electronic device 100 (e.g., account information associated with various services supported by at least one application program loaded or installed in the electronic device 100) or personal information associated with a user (e.g., information about a name, an age, a gender, an address, an anniversary, or the like). The context manager 145 may store context information associated with the electronic device 100 (e.g., active or sleep information, power information, connecting device information, information about an application program of a foreground state, or the like) or may manage context information associated with the user (e.g., a location or motion (sleep, exercise, driving, or the like) of the user or the like). The preference manager 146 may manage information associated with an operation pattern of the electronic device 100 of the user (e.g., leisure activities, a preference place, an operation time, a frequently executed application program, content, or the like).

In an embodiment, the processor 140 may determine a current state of the electronic device 100 (or the user of the electronic device 100) with reference to at least one information managed by the profile manager 144, the context manager 145, or the preference manager 146. The processor 140 may deliver the determined information to the information management module 141. The information management module 141 may load information corresponding to the determined information of the processor 140 among at least one information managed by the profile manager 144, the context manager 145, or the preference manager 146 from the memory 120 and may transmit the loaded information to the information sharing server 300. In this operation, the information management module 141 may be triggered based on the determination of the state of the electronic device 100 (or the user of the electronic device 100) to transmit information to the information sharing server 300, or may transmit information in response to an information request of the information sharing server 300.

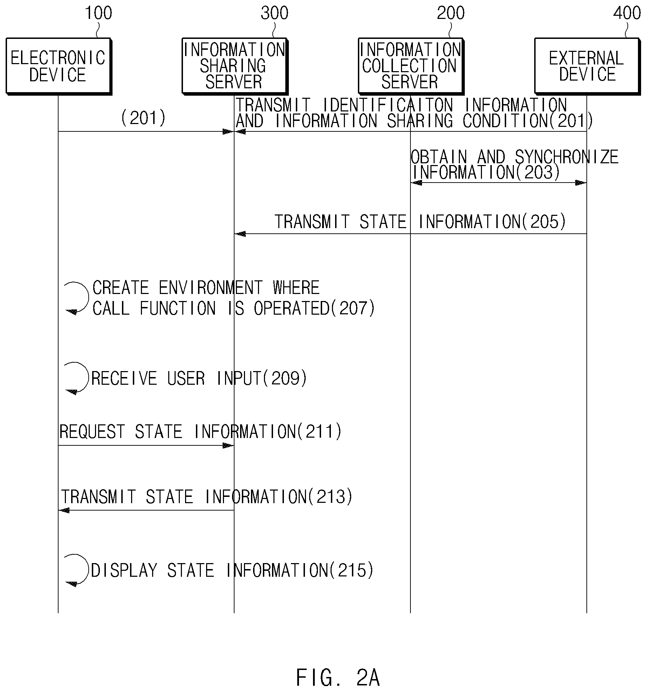

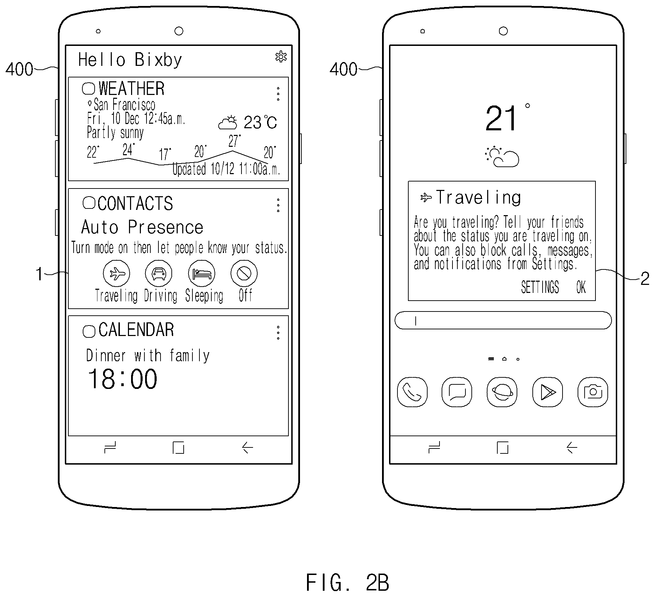

FIG. 2a is a signal sequence diagram illustrating a process of obtaining state information about a user of an external device according to an embodiment. FIG. 2b is a view illustrating various forms of obtaining state information about a user of an external device according to an embodiment. As described above, operations performed by each of an electronic device 100 and at least one external device 400 described with reference to FIG. 2a may be interchangeable. Hereinafter, a description will be given of an embodiment in which the electronic device 100 obtains state information about the at least one external 400 (or a user of the at least one external 400).

Referring to FIG. 2a, in operation 201, each of the electronic device 100 and the at least one external device 400 which operate a state information sharing service (or join the state information sharing service) may transmit its identification information (e.g., a model number, a unique ID, a telephone number, or the like) and information associated with its information sharing condition to an information sharing server 300. For example, each of the electronic device 100 and the at least one external device 400 may transmit the identification information and the information associated with the information sharing condition to the information sharing server 300 at its booting time, at a time when the state information sharing service is activated, or at a time of access to a neighbor cell. In an embodiment, the information sharing condition may be set by user control in the electronic device 100 or the at least one external device 400. In sharing state information associated with the electronic device 100 or the at least one external device 400 with the outside, an item for a shared target, a shared range, a shared period, a shared place, or the like may be set. The information sharing server 300 may map the transmitted identification information to the transmitted information associated with the information sharing condition and may manage the mapped information in a DB or index. In this operation, when receiving information associated with an information sharing condition, different from information associated with an existing information sharing condition managed in the DB or index, the information sharing server 300 may update the DB or index in real time or over a scheduled period.

In operation 203, the at least one external device 400 may obtain information associated with the at least one external device 400 (or the user of the at least one external device 400) from a memory in the at least one external device 400 or an information collection server 200. Alternatively, the at least one external device 400 may interact with the information collection server 200 and may synchronize at least one information stored in the memory with at least one information managed by the information collection server 200.

In operation 205, a processor included in the at least one external device 400 may determine a current state of the at least one external device 400 (or the user of the at least one external device 400) and may transmit information corresponding to the determined current state (hereinafter referred to as "state information") among at least one information obtained from the memory of the at least one external device 400 or the information collection server 200 to the information sharing server 300. In this operation, the processor may transmit the state information itself depending on the determination of the current state or may transmit the state information in response to a request of the information sharing server 300. The information sharing server 300 may apply and manage the transmitted state information on its internal DB or index. In various embodiments, after transmitting the state information to the information sharing server 300, when a state of the at least one external device 400 (or the user of the at least one external device 400) is changed, the processor of the at least one external device 400 may transmit new state information corresponding to the change state to the information sharing server 300. Thus, the information sharing server 300 may update and manage existing state information applied on the DB or index to the new state information.

In operation 207, a processor 140 of FIG. 1b in the electronic device 100 may create an environment where a communication function (e.g., a call function) is operated. For example, the processor 140 may create the environment where the communication function is operated by executing an application program (e.g., a call, contact, or message application program or the like) which supports to operate the communication function of the electronic device 100 among at least one application program loaded or installed in the electronic device 100 in response to user control.

In operation 209, the processor 140 may output an interface on a screen where an application program is executed, depending on the execution of the application program which supports to operate the communication function and may receive a signal corresponding to a user input performed on the interface. For example, the processor 140 may receive a dial input signal provided from the user on a dial interface included as at least a portion of the interface. Alternatively, the processor 140 may receive an input signal for selecting the user of the specific external device 400 on a contact interface included as at least a portion of the interface.

In operation 211, the processor 140 may identify information (e.g., telephone number information, name information, or the like) corresponding to the user input on the electronic device 100 in response to the user input and may transmit the identified information to the information sharing server 300 to request the information sharing server 300 to provide state information associated with the external device 400 (or the user of the external device 400) corresponding to the identified information. In this operation, the processor 140 may further transmit identification information (e.g., a model number, a unique ID, a telephone number, or the like) of the electronic device 100 to the information sharing server 300 to support the information sharing server 300 in identifying the electronic device 100 on the internal DB or index.

In operation 213, the information sharing server 300 may obtain state information associated with the external device 400 corresponding to the identified information on the DB or index in response to the request of the processor 140 and may transmit at least a portion of the state information to the electronic device 100 based on information associated with an information sharing condition of the external device 400. In various embodiments, the above-mentioned operation 213 may be excluded according to the information sharing condition of the external device 400. For example, when the electronic device 100 is not matched with the information associated with the information sharing condition of the external device 400 (e.g., when the external device 400 is not set to share state information with the electronic device 100), the information sharing server 300 may fail to transmit the state information to the electronic device 100.

Receiving the state information from the information sharing server 300, in operation 215, the processor 140 of the electronic device 100 may display the state information on one region of an interface of an application program which supports to operation the communication function. For example, the processor 140 may include content, such as an image, a text, a symbol, an icon, or a badge, including the state information or indicating the state information, in the interface.

In the description above, the embodiment is exemplified as the process where the processor 140 of the electronic device 100 requests the information sharing server 300 to transmit state information of the external device 400 corresponding to a user input in response to the user input (e.g., a dial input, an input for selecting a call destination, or the like) provided to an interface of the application program which supports to operate the communication function. However, embodiments are not limited thereto. According to various embodiments, when receiving state information from the at least one external device 400, the information sharing server 300 may transmit the received state information to the electronic device 100 itself. Alternatively, according to various embodiments, after receiving a request to share state information with the electronic device 100 from the at least one external device 400 which provides the state information, the information sharing server 300 may transmit the state information.

When receiving a request to share state information from the at least one external device 400 or when transmitting state information itself, for example, the information sharing server 300 may transmit the state information, received from the at least one external device 400, to the electronic device 100 irrespective of creating an environment where a communication function of the electronic device is operated. The processor 140 of the electronic device 100 may store the state information received from the information sharing server 300 in a memory 120 of FIG. 1b and may identify state information of the external device 400 corresponding to a user input among at least one state information stored in the memory 120 in response to the user input provided to an interface of the application program. The processor 140 may display the identified state information of the external device 400 on one region of the interface of the application program.

Alternatively, in various embodiments, after receiving a request to provide state information of the external device 400 corresponding to a user input which occurs on the interface of the application program from the electronic device 100, the information sharing server 300 may request the external device 400 to provide current state information of the external device 400 (or the user of the external device 400) to obtain the current state information and may transmit state information corresponding to an information sharing condition of the external device 400 among the obtained state information to the electronic device 100.

In various embodiments of the above-mentioned operation 213, the at least one external device 400 may exclude information obtained from the memory of the at least one external device 400 or the information collection server 200 and may obtain information from the user of the at least one external device 400. In this regard, referring to FIG. 2b, the at least one external device 400 may operate a content curation service. According to an embodiment, various types of content may be included in an interface which functions as an operation platform of the content curation service in the form of, for example, at least one card. In an embodiment, the processor of the at least one external device 400 may display a content card 1 capable of setting a current state of the at least one external device 400 (or the user of the at least one external device 400) using at least one of the at least one card. In this operation, the processor of the at least one external device 400 may configure the content card 1 with reference to information (e.g., log information, location information, connecting device information, roaming information, or the like) associated with the at least one external device 400 (or the user of the at least one external device 400) at a current time managed by an information management module. Alternatively, the processor may output a pop-up window 2 including query information about a current state of the at least one external device 400 (or the user of the at least one external device 400). In response, the processor may configure the query information with reference to information associated with the at least one external device 400 (or the user of the at least one external device 400) at a current time managed by the information management module.

In an embodiment, the process of the at least one external device 400 may transmit information which is selected according to a user input (or touch) on the content card 1 or the pop-up window 2 or answers or approves a query to the information sharing server 300. In various embodiments, when information of the external device 400 (or the user of the external device 400) managed by the information management module is updated, the processor may include the new content card 1 in an interface of the content curation service in real time or over a scheduled period or may output the pop-up window 1 including new query information.

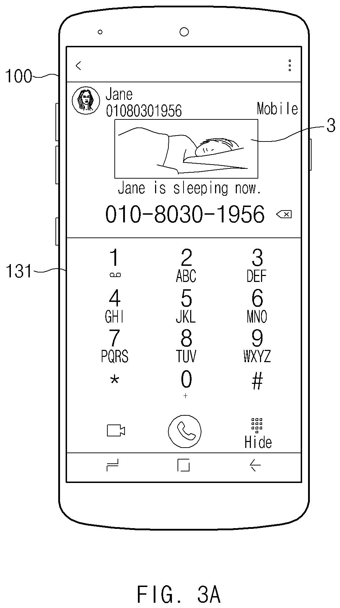

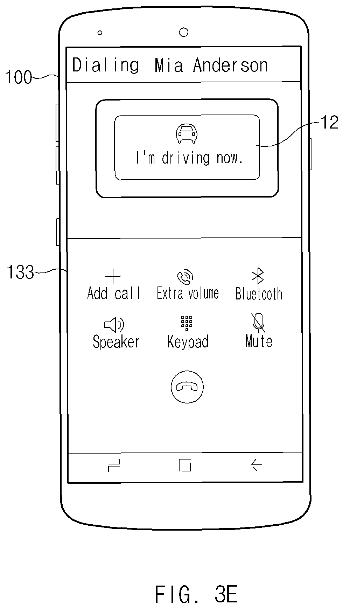

FIGS. 3a to 3d are views illustrating various forms in which an electronic device displays state information about a user of an external device through a first interface according to an embodiment. FIG. 3e is a view illustrating a form in which an electronic device displays state information about a user of an external device through a second interface according to an embodiment.

In an embodiment, a processor (e.g., a processor 140 of FIG. 1b) of an electronic device 100 may output state information associated with at least one external device (e.g., at least one external device 400 of FIG. 1b) (or a user of the at least one external device 400), received from an information sharing server (e.g., an information sharing server 300 of FIG. 1b). For example, when executing at least one application program (e.g., a call, contact, or message application program or the like) which supports to operate a communication function of the electronic device 100 in response to user control, the processor 140 may display at least one state information received from the information sharing server 300 on at least one region of an interface according to the execution or operation of the application program.

Referring to FIG. 3a in connection with the above-mentioned contents, the processor 140 may receive a dial input signal provided from a user on a first interface 131 (e.g., a dial interface) according to execution or operation of a first application program (e.g., a call application program). In this operation, the processor 140 may verify whether a telephone number (or the external device 400 or a user of the external device 400) corresponding to the received dial input signal is registered for a state information sharing service. For example, when all of a dial input signal for a specified number system (e.g., an 11-digit number) are received, the processor 140 may transmit information about a telephone number corresponding to the dial input signal to the information sharing server 300 and may verify whether the telephone number is registered for the state information sharing service based on a response of the information sharing server 300. In an embodiment, when a response of the information sharing server 300 indicates that the telephone number is registered for the state information sharing service, the processor 140 may receive state information associated with the external device 400 (or the user of the external device 400) corresponding to the telephone number from the information sharing server 300 and may display the received state information on one region of the first interface 131. For example, the processor 140 may display the received state information on a region adjacent to a telephone number displayed on the first interface 131 (e.g., a telephone number displayed according to a dial input of a user). Alternatively, the processor 140 may display the received state information on a region adjacent to identification information of the user of the external device 400 corresponding to the telephone number among identification information (e.g., names) of the user of the at least one external device 400 included in the first interface 131. In various embodiments, the processor 140 may display state information provided from the information sharing server 300 as content such as an icon, a badge, a system, a text, or an image indicating the state information.

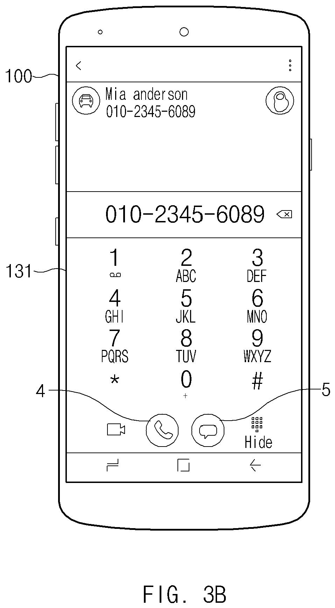

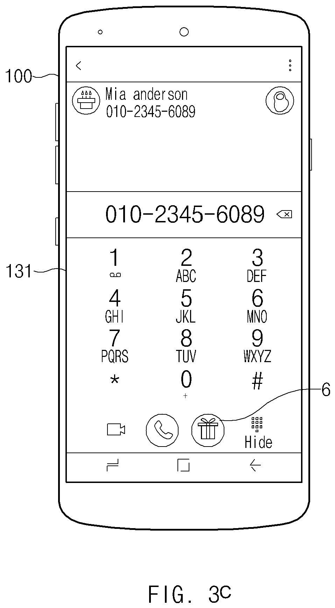

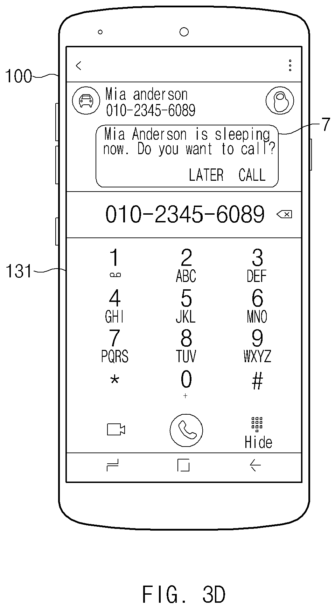

Hereinafter, in FIG. 3b, 3c, or 3d, the processor 140 may perform an operation of verifying whether a corresponding telephone number is registered for the state information sharing service depending on reception of a dial input signal according to a user input or an operation of receiving state information about the external device 400 corresponding to the telephone number from the information sharing server 300 in the same or similar manner to the above-mentioned contents.

Referring to FIG. 3b, when state information associated with the external device 400 (or the user of the external device 400), provided from the information sharing server 300, indicates a state (e.g., a first state), for example, sleep, driving, exercise, roaming, or a meeting, the processor 140 may display a call button 4 and/or a message button 5 on one region of the first interface 131. In other words, when it is impossible or difficult to operate a communication function (or a call function) of the external device 400 (or the user of the external device 400) corresponding to a telephone number input from a user, the processor 140 may display the message button 5 together with the call button 4, or may exclude the call button 4 and may display only the message button 5. In various embodiments, when state information provided from the information sharing server 300 indicates a driving state in which a Bluetooth carkit is operated, the processor 140 may display a specified text (e.g., a BT carkit) on a region adjacent to the call button 4.

Referring to FIG. 3c, when state information associated with the external device 400 (or the user of the external device 400), provided from the information sharing server 300, indicates a state (e.g., a second state) of an anniversary (e.g., a birthday, graduation, acceptance, childbirth, or a marriage, or the like), the processor 140 may display a Gifticon button 6 on one region of the first interface 131. Alternatively, the processor 140 may display a remittance button or a send button of content (e.g., an image message, a voice message, or the like) for a similar purpose to the Gifticon button 6. In an embodiment, when a user input (e.g., a touch) is provided to the Gifticon button 6 or the remittance button, the processor 140 may control to execute a 3^{rd} party application program corresponding to the buttons. In this operation, when the electronic device 100 does not include the 3^{rd} party application program, the processor 140 may control to execute an online market application program such as the App Store to guide the user to download the 3^{rd} party application program. Alternatively, when a user input is provided to the send button of the content, the processor 140 may activate a camera module, a microphone module, or the like loaded into the electronic device 100 or may execute a gallery application program or the like to support the user in selecting previously stored content.

Referring to FIG. 3d, the processor 140 may output a message 7 associated with state information (e.g., sleep, driving, exercise, roaming, a meeting, or the like) of the external device 400 (or the user of the external device 400) described with reference to FIG. 3b on one region of the first interface 131. In an embodiment, the message 7 may include query information associated with the state information and may support or limit call origination to the external device 400 (or the user of the external device 400) depending on a user input which responds to the query information. In various embodiments, the query information included in the message may be output in the form of a voice through the microphone module loaded into the electronic device 100.

Referring to FIG. 3e, the processor 140 may display state information of the user of the external device 400 (or the external device 400) through a second interface 133 of an application program (e.g., a call application program) which supports to operate the communication function (e.g., an interface indicating an outgoing call connection state) other than the above-mentioned first interface (e.g., the first interface 131 of FIG. 3a, 3b, 3c, or 3d). In this regard, after a user input (e.g., a dial input, an input for selecting a called party, or the like) occurs on the above-mentioned first interface 131, when a call button (or a call send button) is operated (e.g., touched) by a user, the processor 140 may originate a call to the external device 400 corresponding to the user input. In this operation, the processor 140 may convert the first interface 131 into the second interface 133 and may display state information associated with the external device 400 (e.g., an external device which receives an outgoing call), provided from the information sharing server 300, on one region of the second interface 133.

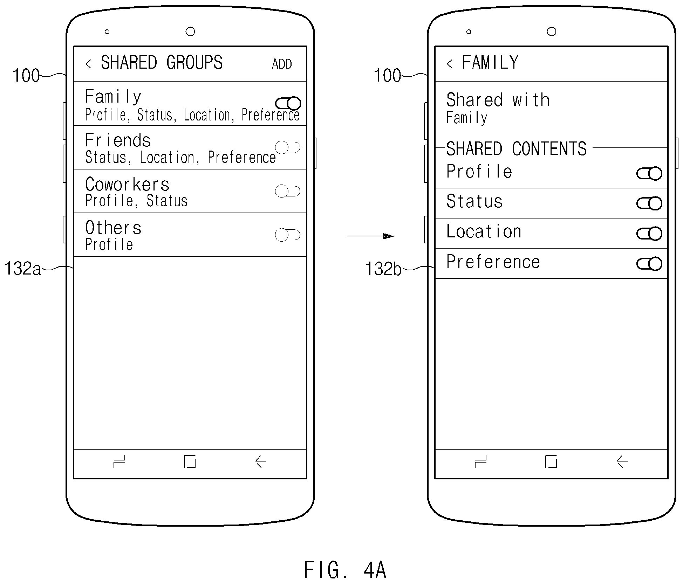

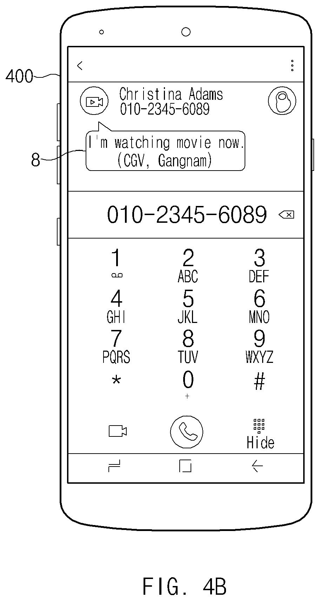

FIG. 4a is a view illustrating a form of setting a first information sharing condition of an electronic device according to an embodiment. FIG. 4b is a view illustrating various forms in which an electronic device displays state information about a user of an external device based on settings of a first information sharing condition of the external device condition according to an embodiment.

In an embodiment, in connection with operating a state information sharing service, a processor 140 of FIG. 2b in an electronic device 100 may set an information sharing condition of the electronic device 100 for at least one external device 400 of FIG. 1b. For example, the processor 140 may set the information sharing condition in response to user control performed on an interface (e.g., a function setup screen) of at least one application program (e.g., a call, contact, or message application program or the like) which supports a communication function of the electronic device 100.

Referring to FIG. 4a in connection with the above-mentioned contents, in response to control of a user of the electronic device 100, performed on a third interface 132a included as at least a portion of a screen where the application program is executed, the processor 140 may set a target to share state information associated with the electronic device 100 (or the user of the electronic device 100). For example, the processor 140 may set a target to share the state information depending on a user input for selecting at least a portion of at least one group (e.g., family, friends, coworkers, or others) included in the third interface 132a. In various embodiments, the information sharing condition may be set by being combined with another information sharing condition. For example, when at least one specific target is set in response to the user input, the processor 140 may convert the third interface 132a into a fourth interface 132b which displays another type of information sharing condition. In an embodiment, the fourth interface 132b may support to set a category (e.g., a profile, context, preference, or the like) of state information to be shared.

Referring to FIG. 4b, displaying state information about the electronic device 100 (or the user of the electronic device 100), an external device 400 of FIG. 1b may receive and display only state information corresponding to an information sharing condition of the electronic device 100 from an information sharing server 300 of FIG. 1b depending on settings of the information sharing condition by the processor 140 of the electronic device 100. FIG. 4b may be understood as family is set as a target to share information in the electronic device 100 and as context information (e.g., motion or a location of the user) is set as a category of state information to be shared. Thus, the external 400 (or a user (Christina Adams) of the external device 400) corresponding to the family may display state information 8 (e.g., user motion information (movie watching) and location information (Gangnam)) corresponding to a category condition of state information to be shared in the electronic device 100 on an interface of an application program which supports to operate a communication function.

Hereinafter, a description of setting an information sharing condition of the electronic device 100 may be similar to the above-mentioned contents. A description will be given of details different from the contents described with reference to FIGS. 4a and 4b, with reference to the accompanying drawings.

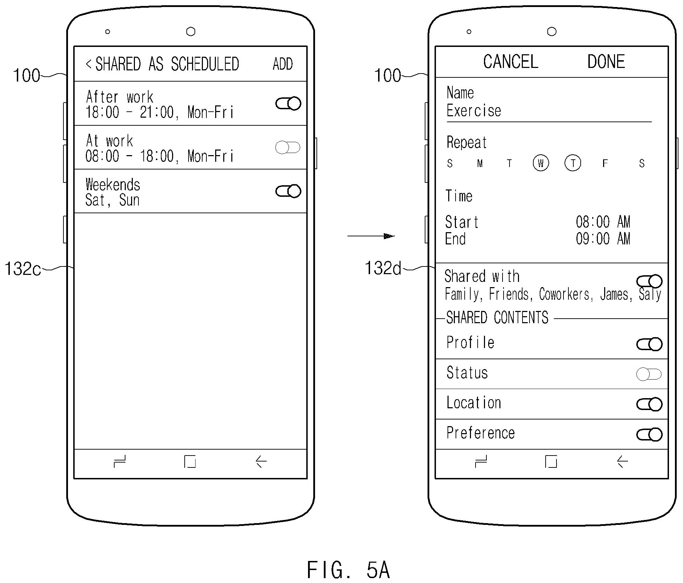

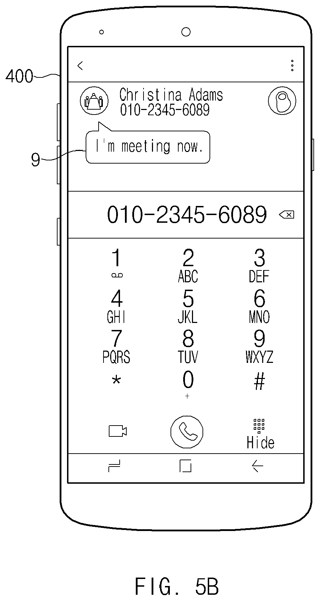

FIG. 5a is a view illustrating a form of setting a second information sharing condition of an electronic device according to an embodiment. FIG. 5b is a view illustrating various forms in which an electronic device displays state information about a user of an external device based on settings of a second information sharing condition of the external device condition according to an embodiment.

Referring to FIG. 5a, a processor 140 of FIG. 1b in an electronic device 100 may set a shared time or a shared date associated with an information sharing condition of the electronic device 100 on a fifth interface 132c of an application program described with reference to FIG. 4a. For example, the processor 140 may display a screen for setting a specific time (e.g., after work, at work, weekends, or the like) or a specific date for sharing state information of the electronic device 100 on the fifth interface 132c. The processor 140 may convert the fifth interface 132c into a sixth interface 132d capable of setting a target or category to share state information at the specific time or at the specific date, under user control performed on the fifth interface 132c. In an embodiment, at least one specific context information may be set by being matched to the specific time by a user.

For example, when working hours are set as an information sharing condition of the electronic device 100 and when a meeting is set as context information mapped to the working hours, as shown in FIG. 5b, an external device 400 which receives state information of the electronic device 100 at a time over the working hours from an information sharing server 300 of FIG. 1b may display state information 9 (e.g., I'm meeting now) including context information set in connection with the working hours on one region of an interface of an application program which supports to operate a communication function.

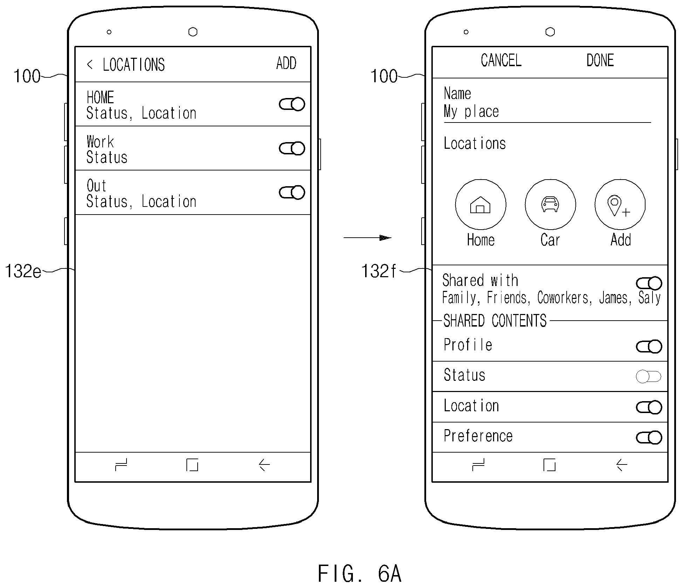

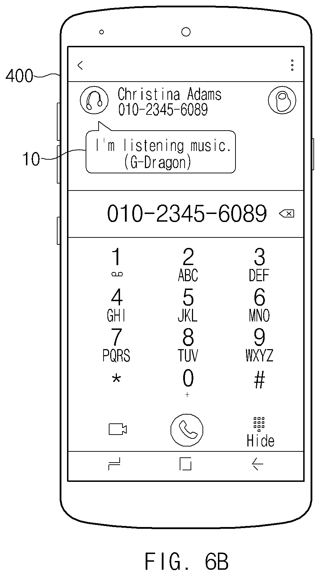

FIG. 6a is a view illustrating a form of setting a third information sharing condition of an electronic device according to an embodiment. FIG. 6b is a view illustrating various forms in which an electronic device displays state information about a user of an external device based on settings of a third information sharing condition of the external device condition according to an embodiment.

Referring to FIG. 6a, a processor 140 of FIG. 1b in an electronic device 100 may set at least one place information (e.g., home, work, outside, or the like) associated with an information sharing condition of the electronic device 100 on a seventh interface 132e of an application program described with reference to FIG. 4a. When a specific place is set from a user on the seventh interface 132e, the processor 140 may convert the seventh interface 132e into an eighth interface 132f capable of setting a target to share state information or a category of the state information at the selected specific place. Thus, when a state of the electronic device 100 (or the user of the electronic device 100) corresponds to the at least one set place information, the electronic device 100 may provide state information associated with the electronic device 100, determined at the place, to at least one external device 400 of FIG. 1b.

For example, when home corresponding to place information is set as an information sharing condition of the electronic device 100 and when context information is set as a category of state information to be shared in the electronic device, as shown in FIG. 6b, receiving state information of the electronic device 100 from an information sharing server 300 of FIG. 1b at a time when the electronic device 100 (or the user of the electronic device 100) exists on a location corresponding to the home, an external device 400 may display state information 10 (e.g., I'm listening music) including context information (e.g., listening to music) of the user, determined at the home, on one region of an interface of an application program which supports to operate a communication function. In various embodiments, the state information 10 may further include additional information (e.g., information about a singer of played music) about the context information.

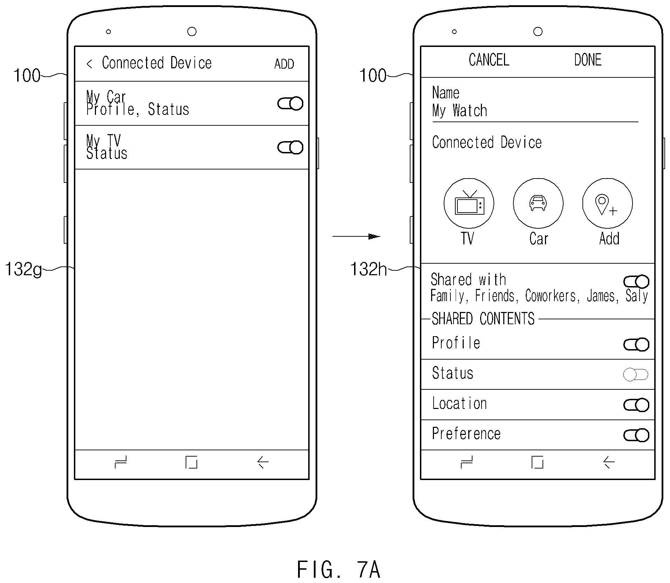

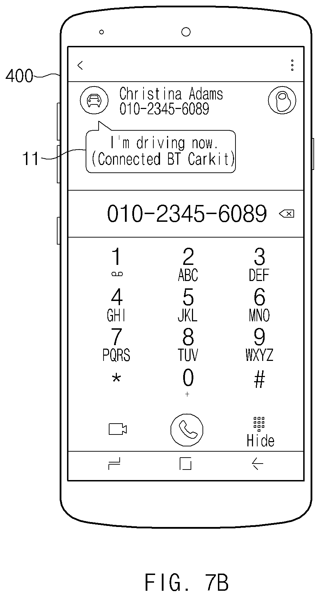

FIG. 7a is a view illustrating a form of setting a fourth information sharing condition of an electronic device according to an embodiment. FIG. 7b is a view illustrating various forms in which an electronic device displays state information about a user of an external device based on settings of a fourth information sharing condition of the external device condition according to an embodiment.

Referring to FIG. 7a, a processor 140 of FIG. 1b in an electronic device 100 may set information about at least one connected device (e.g., a driving device or an Internet of things (IoT) device) associated with an information sharing condition of the electronic device 100 on a ninth interface 132g of an application program described with reference to FIG. 4a. In response to user control for specifying a device connected with the electronic device 100, the processor 140 may convert the ninth interface 132g into a tenth interface 132h capable of setting a target to share state information, a category of state information to be shared, or the like when the electronic device 100 is connected to the device. Thus, when a state of the electronic device 100 corresponds to the set information about the connected device, the electronic device 100 may provide state information associated with the electronic device 100, determined at a time when the device is connected, to at least one external device 400 of FIG. 1b. Alternatively, at least one specific context information may be mapped to the connecting device information.

For example, when a car is set as connecting device information of the electronic device 100 and when driving is set as context information mapped to the car, as shown in FIG. 7b, receiving state information of the electronic device 100 from an information sharing server 300 of FIG. 1b at a time when the electronic device 100 is connected to the set connected device, an external device 400 may display state information 11 (e.g., I'm driving now) including context information set in connection with the car on one region of an interface of an application program which supports to operate a communication function.

The external device 400 may receive the state information 11 including context information (e.g., driving) of the electronic device 100, determined at a time when the electronic device 100 is connected to the car, from the information sharing server 300 and may display the received state information 11 on one region of an interface of the application program. In this case, the state information 11 may further include at least one additional information (e.g., information about a connected interface (e.g., Bluetooth, a cable, an earphone, or the like)) incidental to the context information of the electronic device 100.

An electronic device according to various embodiments may include a communication circuit, a memory storing an application for supporting a call function, a display, and a processor configured to be electrically connected with the communication circuit, the memory, and the display.

According to various embodiments, the processor may be configured to output a user interface including a dial button and a call send button according to execution of the application on the display, obtain a user input for determining a called party through the user interface, transmit identification information corresponding to the determined called party to an external server using the communication circuit, receive state information of the called party as a response to the transmission of the identification information from the external server using the communication circuit, display the state information of the called party on one region of the user interface of the application, and originate a call to the called party in response to selection of the call send button.

According to various embodiments, the processor may be configured to obtain a dial button input signal corresponding to a telephone number of the called party as at least a portion of obtaining the user input.

According to various embodiments, the processor may be configured to, when the state information of the called party, received from the external server, includes a specified first state, display a compose message button on one region of the user interface.

According to various embodiments, the processor may be configured to, when the state information of the called party, received from the external server, includes a specified first state, output a query information message associated with the state information on one region of the user interface.

According to various embodiments, the query information message may include information for inquiring about whether to originate the call to the called party.

According to various embodiments, the processor may be configured to, when the state information of the called party, received from the external server, includes a specified second state, display a button for supporting to execute an application associated with the second state on one region of the user interface.

An electronic device according to various embodiments may include a communication circuit, a memory storing an application for supporting a call function, a display, and a processor configured to be electrically connected with the communication circuit, the memory, and the display. The processor may be configured to output a user interface according to execution of the application on the display, obtain a user input for determining an information sharing condition for state information of a user of the electronic device to be shared with a called party through the user interface and transmit state information corresponding to the determined information sharing condition to an external server using the communication circuit.

According to various embodiments, the processor may be configured to obtain a user input for determining a target to share the state information of the user of the electronic device, as at least a portion of obtaining the user input for determining the information sharing condition.

According to various embodiments, the processor may be configured to obtain a user input for determining at least one of at least one category classified for the state information of the user of the electronic device, as at least a portion of obtaining the user input for determining the information sharing condition.

According to various embodiments, the processor may be configured to obtain a user input for determining a shared time or a shared date associated with sharing among the state information of the user of the electronic device, as at least a portion of obtaining the user input for determining the information sharing condition.

According to various embodiments, the processor may be configured to obtain a user input for determining an external device connected to the electronic device, as at least a portion of obtaining the user input for determining the information sharing condition.

According to various embodiments, the processor may be configured to transmit state information determined in real time for the determined information sharing condition to the external server, as at least a portion of transmitting the state information corresponding to the determined information sharing condition to the external server.

According to various embodiments, the processor may be configured to transmit state information previously mapped to the determined information sharing condition to the external server, as a portion of transmitting the state information corresponding to the determined information sharing condition to the external server.

A method for providing information in an electronic device may include outputting a user interface including a dial button and a call send button according to execution of the application for supporting a call function, obtaining a user input for determining a called party through the user interface, transmitting identification information corresponding to the determined called party to an external server, receiving state information of the called party as a response to the transmission of the identification information from the external server, displaying the state information of the called party on one region of the user interface of the application, and originating a call to the called party in response to selection of the call send button.

According to various embodiments, the obtaining of the user input may include obtaining a dial button input signal corresponding to a telephone number of the called party.

According to various embodiments, the receiving of the state information of the called party may include, when the state information includes a specified first state, displaying a compose message button on one region of the user interface.

According to various embodiments, the receiving of the state information of the called party may include, when the state information includes a specified first state, outputting a query information message associated with the state information on one region of the user interface.

According to various embodiments, the outputting of the query information message may include outputting information for inquiring about whether to originate the call to the called party.

According to various embodiments, the receiving of the state information of the called party may include, when the state information includes a specified second state, displaying a button for supporting to execute an application associated with the second state on one region of the user interface.

According to various embodiments, the method may further include requesting the external server to transmit information about whether the determined called party joins a specified service.

FIG. 8 is a view illustrating an electronic device in a network environment according to various embodiments.

Referring to FIG. 8, an electronic device 1101 (e.g., the electronic device 100 of FIG. 1a) may communicate with an electronic device 1102 through a first network 1198 (e.g., a short-range wireless communication) or may communicate with an electronic device 1104 or a server 1108 through a second network 1199 (e.g., a long-distance wireless communication) in a network environment 1100. According to an embodiment, the electronic device 1101 may communicate with the electronic device 1104 through the server 1108. According to an embodiment, the electronic device 1101 may include a processor 1120, a memory 1130, an input device 1150, a sound output device 1155, a display device 1160, an audio module 1170, a sensor module 1176, an interface 1177, a haptic module 1179, a camera module 1180, a power management module 1188, a battery 1189, a communication module 1190, a subscriber identification module 1196, and an antenna module 1197. According to some embodiments, at least one (e.g., the display device 1160 or the camera module 1180) among components of the electronic device 1101 may be omitted or other components may be added to the electronic device 1101. According to some embodiments, some components may be integrated and implemented as in the case of the sensor module 1176 (e.g., a fingerprint sensor, an iris sensor, or an illuminance sensor) embedded in the display device 1160 (e.g., a display).

The processor 1120 may operate, for example, software (e.g., a program 1140) to control at least one of other components (e.g., a hardware or software component) of the electronic device 1101 connected to the processor 1120 and may process and compute a variety of data. The processor 1120 may load a command set or data, which is received from other components (e.g., the sensor module 1176 or the communication module 1190), into a volatile memory 1132, may process the loaded command or data, and may store result data into a nonvolatile memory 1134. According to an embodiment, the processor 1120 may include a main processor 1121 (e.g., a central processing unit or an application processor) and an coprocessor 1123 (e.g., a graphic processing device, an image signal processor, a sensor hub processor, or a communication processor), which operates independently from the main processor 1121, additionally or alternatively uses less power than the main processor 1121, or is specified to a designated function. In this case, the coprocessor 1123 may operate separately from the main processor 1121 or embedded.

In this case, the coprocessor 1123 may control, for example, at least some of functions or states associated with at least one component (e.g., the display device 1160, the sensor module 1176, or the communication module 1190) among the components of the electronic device 1101 instead of the main processor 1121 while the main processor 1121 is in an inactive (e.g., sleep) state or together with the main processor 1121 while the main processor 1121 is in an active (e.g., an application execution) state. According to an embodiment, the coprocessor 1123 (e.g., the image signal processor or the communication processor) may be implemented as a part of another component (e.g., the camera module 1180 or the communication module 1190) that is functionally related to the coprocessor 1123. The memory 1130 may store a variety of data used by at least one component (e.g., the processor 1120 or the sensor module 1176) of the electronic device 1101, for example, software (e.g., the program 1140) and input data or output data with respect to commands associated with the software. The memory 1130 may include the volatile memory 1132 or the nonvolatile memory 1134.

The program 1140 may be stored in the memory 1130 as software and may include, for example, an operating system 1142, a middleware 1144, or an application 1146.

The input device 1150 may be a device for receiving a command or data, which is used for a component (e.g., the processor 1120) of the electronic device 1101, from an outside (e.g., a user) of the electronic device 1101 and may include, for example, a microphone, a mouse, or a keyboard.

The sound output device 1155 may be a device for outputting a sound signal to the outside of the electronic device 1101 and may include, for example, a speaker used for general purposes, such as multimedia play or recordings play, and a receiver used only for receiving calls. According to an embodiment, the receiver and the speaker may be either integrally or separately implemented.

The display device 1160 may be a device for visually presenting information to the user and may include, for example, a display, a hologram device, or a projector and a control circuit for controlling a corresponding device. According to an embodiment, the display device 1160 may include a touch circuitry or a pressure sensor for measuring an intensity of pressure on the touch.

The audio module 1170 may convert a sound and an electrical signal in dual directions. According to an embodiment, the audio module 1170 may obtain the sound through the input device 1150 or may output the sound through an external electronic device (e.g., the electronic device 1102 (e.g., a speaker or a headphone)) wired or wirelessly connected to the sound output device 1155 or the electronic device 1101.

The sensor module 1176 may generate an electrical signal or a data value corresponding to an operating state (e.g., power or temperature) inside or an environmental state outside the electronic device 1101. The sensor module 1176 may include, for example, a gesture sensor, a gyro sensor, a barometric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 1177 may support a designated protocol wired or wirelessly connected to the external electronic device (e.g., the electronic device 1102). According to an embodiment, the interface 1177 may include, for example, an HDMI (high-definition multimedia interface), a USB (universal serial bus) interface, an SD card interface, or an audio interface.

A connection terminal 1178 may include a connector that physically connects the electronic device 1101 to the external electronic device (e.g., the electronic device 1102), for example, an HDMI connector, a USB connector, an SD card connector, or an audio connector (e.g., a headphone connector).

The haptic module 1179 may convert an electrical signal to a mechanical stimulation (e.g., vibration or movement) or an electrical stimulation perceived by the user through tactile or kinesthetic sensations. The haptic module 1179 may include, for example, a motor, a piezoelectric element, or an electric stimulator.

The camera module 1180 may shoot a still image or a video image. According to an embodiment, the camera module 1180 may include, for example, at least one lens, an image sensor, an image signal processor, or a flash.

The power management module 1188 may be a module for managing power supplied to the electronic device 1101 and may serve as at least a part of a power management integrated circuit (PMIC).

The battery 1189 may be a device for supplying power to at least one component of the electronic device 1101 and may include, for example, a non-rechargeable (primary) battery, a rechargeable (secondary) battery, or a fuel cell.

The communication module 1190 may establish a wired or wireless communication channel between the electronic device 1101 and the external electronic device (e.g., the electronic device 1102, the electronic device 1104, or the server 1108) and support communication execution through the established communication channel. The communication module 1190 may include at least one communication processor operating independently from the processor 1120 (e.g., the application processor) and supporting the wired communication or the wireless communication. According to an embodiment, the communication module 1190 may include a wireless communication module 1192 (e.g., a cellular communication module, a short-range wireless communication module, or a GNSS (global navigation satellite system) communication module) or a wired communication module 1194 (e.g., an LAN (local area network) communication module or a power line communication module) and may communicate with the external electronic device using a corresponding communication module among them through the first network 1198 (e.g., the short-range communication network such as a Bluetooth, a WiFi direct, or an IrDA (infrared data association)) or the second network 1199 (e.g., the long-distance wireless communication network such as a cellular network, an internet, or a computer network (e.g., LAN or WAN)). The above-mentioned various communication modules 1190 may be implemented into one chip or into separate chips, respectively.

According to an embodiment, the wireless communication module 1192 may identify and authenticate the electronic device 1101 using user information stored in the subscriber identification module 1196 in the communication network.

The antenna module 1197 may include one or more antennas to transmit or receive the signal or power to or from an external source. According to an embodiment, the communication module 1190 (e.g., the wireless communication module 1192) may transmit or receive the signal to or from the external electronic device through the antenna suitable for the communication method.

Some components among the components may be connected to each other through a communication method (e.g., a bus, a GPIO (general purpose input/output), an SPI (serial peripheral interface), or an MIPI (mobile industry processor interface)) used between peripheral devices to exchange signals (e.g., a command or data) with each other.

According to an embodiment, the command or data may be transmitted or received between the electronic device 1101 and the external electronic device 1104 through the server 1108 connected to the second network 1199. Each of the electronic devices 1102 and 1104 may be the same or different types as or from the electronic device 1101. According to an embodiment, all or some of the operations performed by the electronic device 1101 may be performed by another electronic device or a plurality of external electronic devices. When the electronic device 1101 performs some functions or services automatically or by request, the electronic device 1101 may request the external electronic device to perform at least some of the functions related to the functions or services, in addition to or instead of performing the functions or services by itself. The external electronic device receiving the request may carry out the requested function or the additional function and transmit the result to the electronic device 1101. The electronic device 1101 may provide the requested functions or services based on the received result as is or after additionally processing the received result. To this end, for example, a cloud computing, distributed computing, or client-server computing technology may be used.

The electronic device according to various embodiments disclosed in the present disclosure may be various types of devices. The electronic device may include, for example, at least one of a portable communication device (e.g., a smartphone), a computer device, a portable multimedia device, a mobile medical appliance, a camera, a wearable device, or a home appliance. The electronic device according to an embodiment of the present disclosure should not be limited to the above-mentioned devices.

It should be understood that various embodiments of the present disclosure and terms used in the embodiments do not intend to limit technologies disclosed in the present disclosure to the particular forms disclosed herein; rather, the present disclosure should be construed to cover various modifications, equivalents, and/or alternatives of embodiments of the present disclosure. With regard to description of drawings, similar components may be assigned with similar reference numerals. As used herein, singular forms may include plural forms as well unless the context clearly indicates otherwise. In the present disclosure disclosed herein, the expressions "A or B", "at least one of A or/and B", "A, B, or C" or "one or more of A, B, or/and C", and the like used herein may include any and all combinations of one or more of the associated listed items. The expressions "a first", "a second", "the first", or "the second", used in herein, may refer to various components regardless of the order and/or the importance, but do not limit the corresponding components. The above expressions are used merely for the purpose of distinguishing a component from the other components. It should be understood that when a component (e.g., a first component) is referred to as being (operatively or communicatively) "connected," or "coupled," to another component (e.g., a second component), it may be directly connected or coupled directly to the other component or any other component (e.g., a third component) may be interposed between them.

The term "module" used herein may represent, for example, a unit including one or more combinations of hardware, software and firmware. The term "module" may be interchangeably used with the terms "logic", "logical block", "part" and "circuit". The "module" may be a minimum unit of an integrated part or may be a part thereof. The "module" may be a minimum unit for performing one or more functions or a part thereof. For example, the "module" may include an application-specific integrated circuit (ASIC).

Various embodiments of the present disclosure may be implemented by software (e.g., the program 1140) including an instruction stored in a machine-readable storage media (e.g., an internal memory 1136 or an external memory 1138) readable by a machine (e.g., a computer). The machine may be a device that calls the instruction from the machine-readable storage media and operates depending on the called instruction and may include the electronic device (e.g., the electronic device 1101). When the instruction is executed by the processor (e.g., the processor 1120), the processor may perform a function corresponding to the instruction directly or using other components under the control of the processor. The instruction may include a code generated or executed by a compiler or an interpreter. The machine-readable storage media may be provided in the form of non-transitory storage media. Here, the term "non-transitory", as used herein, is a limitation of the medium itself (i.e., tangible, not a signal) as opposed to a limitation on data storage persistency.

According to an embodiment, the method according to various embodiments disclosed in the present disclosure may be provided as a part of a computer program product. The computer program product may be traded between a seller and a buyer as a product. The computer program product may be distributed in the form of machine-readable storage medium (e.g., a compact disc read only memory (CD-ROM)) or may be distributed only through an application store (e.g., a Play Store™). In the case of online distribution, at least a portion of the computer program product may be temporarily stored or generated in a storage medium such as a memory of a manufacturer's server, an application store's server, or a relay server.

Each component (e.g., the module or the program) according to various embodiments may include at least one of the above components, and a portion of the above sub-components may be omitted, or additional other sub-components may be further included. Alternatively or additionally, some components (e.g., the module or the program) may be integrated in one component and may perform the same or similar functions performed by each corresponding components prior to the integration. Operations performed by a module, a programming, or other components according to various embodiments of the present disclosure may be executed sequentially, in parallel, repeatedly, or in a heuristic method. Also, at least some operations may be executed in different sequences, omitted, or other operations may be added. While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device, comprising:
a communication circuit;
a memory storing an application for supporting a call function;
a display; and
a processor configured to be operatively connected with the communication circuit, the memory, and the display,
wherein the processor is configured to:
output a user interface including a dial button and a call send button according to execution of the application on the display,
obtain a user input for determining a called party through the user interface;
transmit identification information corresponding to the determined called party to an external server using the communication circuit,
receive state information of the called party as a response to the transmission of the identification information from the external server using the communication circuit,
display the state information of the called party on one region of the user interface of the application, and
originate a call to the called party in response to selection of the call send button.

2. The electronic device of claim 1, wherein the processor is configured to:
obtain a user input for determining the called party based on a dial button input signal corresponding to a telephone number of the called party.

3. The electronic device of claim 1, wherein the processor is configured to:
when the state information of the called party, received from the external server, includes a specified first state, display a compose message button on one region of the user interface.

4. The electronic device of claim 1, wherein the processor is configured to:
when the state information of the called party, received from the external server, includes a specified first state, output a query information message associated with the state information on one region of the user interface.

5. The electronic device of claim 4, wherein the query information message comprises information for inquiring about whether to originate the call to the called party.

6. The electronic device of claim 1, wherein the processor is configured to:
when the state information of the called party, received from the external server, includes a specified second state, display a button for supporting to execute an application associated with the second state on one region of the user interface.

7. The electronic device of claim 1, wherein the processor is configured to:
obtain a user input for determining an information sharing condition for state information of a user of the electronic device to be shared with a called party, through the user interface, and
transmit state information corresponding to the determined information sharing condition to an external server using the communication circuit.

8. The electronic device of claim 1, wherein the processor is configured to:
obtain a user input for determining a target to share the state information of the user of the electronic device, as at least a portion of obtaining the user input for determining the information sharing condition.

9. A method for providing information in an electronic device, the method comprising:
outputting a user interface including a dial button and a call send button according to execution of the application for supporting a call function;
obtaining a user input for determining a called party through the user interface;
transmitting identification information corresponding to the determined called party to an external server;
receiving state information of the called party as a response to the transmission of the identification information from the external server;
displaying the state information of the called party on one region of the user interface of the application; and
originating a call to the called party in response to selection of the call send button.

10. The method of claim 9, wherein the obtaining of the user input comprises:
obtaining a dial button input signal corresponding to a telephone number of the called party.

11. The method of claim 9, wherein the receiving of the state information of the called party comprises:
when the state information includes a specified first state, displaying a compose message button on one region of the user interface.

12. The method of claim 9, wherein the receiving of the state information of the called party comprises:
when the state information includes a specified first state, outputting a query information message associated with the state information on one region of the user interface.

13. The method of claim 12, wherein the outputting of the query information message comprises:
outputting information for inquiring about whether to originate the call to the called party.

14. The method of claim 9, wherein the receiving of the state information of the called party comprises:
when the state information includes a specified second state, displaying a button for supporting to execute an application associated with the second state on one region of the user interface.

15. The method of claim 9, further comprising:
requesting the external server to transmit information about whether the determined called party joins a specified service.
